Europäisches Patentamt

European Patent Office

Office européen des brevets

(19)

(11) Veröffentlichungsnummer: **0 341 468**
**A2**

(12) # EUROPÄISCHE PATENTANMELDUNG

(21) Anmeldenummer: 89107295.1

(51) Int. Cl.⁴: **B65G 13/07**

(22) Anmeldetag: 22.04.89

(30) Priorität: 13.05.88 DE 3816317

(43) Veröffentlichungstag der Anmeldung:
15.11.89 Patentblatt 89/46

(84) Benannte Vertragsstaaten:
AT BE CH DE ES FR GB IT LI NL SE

(71) Anmelder: PROTECH AUTOMATION GmbH
Niederkasseler Strasse 14
D-5000 Köln 90(DE)

(72) Erfinder: Blöcker, Detlef, Dipl.-Ing.
Alter Heeresweg 32
D-5330 Königswinter 21(DE)

(74) Vertreter: Selting, Günther, Dipl.-Ing. et al
Patentanwälte von Kreisler, Selting, Werner
Deichmannhaus am Hauptbahnhof
D-5000 Köln 1(DE)

(54) Duplex-Förderer.

(57) Bei einem Duplex-Förderer, bei dem der Werkstückträger (20) nur an seinen Seiten getragen wird, sind an den Profilleisten (10) Tragrollen (18,19) an verschiebbaren Lagerböcken (14) angebracht. Die Tragrollen (18,19) werden durch einen Antriebsriemen (22) angetrieben, der um entsprechende Riemenrollen (21,23) umläuft.

FIG.1

## Duplex-Förderer

Die Erfindung betrifft einen Duplex-Förderer der im Oberbegriff des Patentanspruchs 1 angegebenen Art.

Ein Duplex-Förderer ist ein Förderer, der Werkstücke oder Werkstückträger nur an ihren seitlichen Rändern abstützt. Ein Duplex-Förderer hat also zwei parallele Förderbahnen, auf denen die seitlichen Ränder desselben Gegenstandes aufliegen, während die Mitte des Gegenstandes nicht unterstützt ist. Ein Duplex-Förderer der im Oberbegriff des Patentanspruchs 1 angegebenen Art ist bekannt aus DE 72 16 125 U1. Dieser bekannte Duplex-Förderer weist zwei parallele Profilleisten auf, an denen in Abständen Lagerböcke montiert sind. An jedem Lagerbock ist eine Rolle gelagert. Die Werkstücke werden unmittelbar auf die Rollen aufgelegt und sie können auf den Rollen in Längsrichtung des Duplex-Förderers verschoben werden. Durch die Anbringung der Tragrollen an verschiebbaren Lagerböcken kann die Rollendichte entsprechend der zu fördernden Last beliebig variiert werden. Nachteilig ist, daß die Rollen nicht angetrieben sind und daß der Transport der Werkstücke entweder eine schräge Rollenbahn erfordert oder zusätzliche Antriebseinrichtungen, die an den Werkstücken angreifen. Außerdem ist die seitliche Führung der Werkstücke auf dem Duplex-Förderer unzureichend.

Aus DE-A-1 756 916 ist eine Palettentransportbahn nach dem System eines Duplex-Förderers bekannt, bei der die Tragrollen durch Keilriemen angetrieben sind. Die Trag rollen sind an den Seitenwänden des Förderers unverschiebbar angebracht und drehbar gelagert. Zwischen jeweils zwei Tragrollen befindet sich eine Spannrolle. Ein solches Fördersystem wird jeweils für einen speziellen Anwendungsfall konzipiert und kann danach nicht ohne umfangreiche Umkonstruktion geändert werden.

Aus DE-A-3 618 584 ist ferner ein Duplex-Förderer in Form eines Bandförderers bekannt. Hierbei sind zwei parallel zueinander verlaufende Profilleisten vorgesehen, die an den einander zugewandten Seiten Laufleisten aufweisen, welche an ihrer Oberseite mit einer Gleitbeschichtung versehen sind. Auf jeder Gleitbeschichtung liegt der Obertrum eines Förderbandes auf, das als Trag- und Förderelement für einen Werkstückträger dient.

Der Erfindung liegt die Aufgabe zugrunde, einen Duplex-Förderer der im Oberbegriff des Patentanspruchs 1 angegebenen Art zu schaffen, der angetriebene Tragrollen aufweist und eine exakte Führung der Werkstückträger ermöglicht, so daß er in einer Montagestation zur Durchführung präziser Montagearbeiten an Werkstücken, die auf den Werkstückträgern angeordnet sind, verwendet werden kann.

Die Lösung dieser Aufgabe erfolgt erfindungsgemäß mit den im kennzeichnenden Teil des Patentanspruchs 1 angegebenen Merkmalen.

Bei dem erfindungsgemäßen Duplex-Förderer sind die Tragrollen an Lagerböcken angebracht, die längs der Profilleisten verschoben werden können. Die Tragrollen, oder mindestens einige davon, sind mit Riemenrollen gekoppelt, die von Antriebsriemen angetrieben sind. Die Antriebsriemen erstrecken sich also jeweils über die Riemenrollen mehrerer unabhängig voneinander positionierbarer Lagerböcke und außerdem sind die Lagerböcke mit seitlichen Führungsflächen versehen, um die Werkstückträger, z.B. Paletten, seitlich zu führen. Da die Lagerböcke gegenseitige Abstände haben, die kürzer sind als die Palettenlänge, ist eine seitliche Führung der Paletten durch die Lagerböcke in jedem Zustand des Förderns gewährleistet. Dabei ist zu berücksichtigen, daß Verdrehungen der Palette hauptsächlich in denjenigen Bereichen auftreten können, in denen ein Antrieb durch die Tragrollen erfolgt. In diesen Bereichen, nämlich an den Lagerböcken, sind zugleich die Führungsflächen angeordnet, die für eine Beibehaltung der Ausrichtung der Paletten sorgen.

Ein besonderer Vorteil besteht in der einseitigen Lagerung von Trag- und Riemenrollen, wobei die Riemenrollen an den einander zugewandten Enden der Tragrollen angeordnet sind. Auf diese Weise sind die Riemenrollen von der Innenseite des Duplex-Rollenförderers aus zugänglich, wodurch ein leichtes Auswechseln des Antriebsriemens möglich ist.

Im folgenden werden unter Bezugnahme auf die Zeichnungen Ausführungsbeispiele der Erfindung näher erläutert.

Es zeigen:

Fig. 1 eine Teil-Ansicht des Rollenförderers aus Richtung des Pfeiles I von Fig. 2,

Fig. 2 einen Querschnitt durch den Förderer und

Fig. 3 in gleicher Darstellung wie Fig. 1 eine Ansicht bei einem Förderer, bei dem die Lagerböcke jeweils ein Rollenpaar aus Tragrolle und damit verbundener Riemenrolle und eine Umlenkrolle tragen.

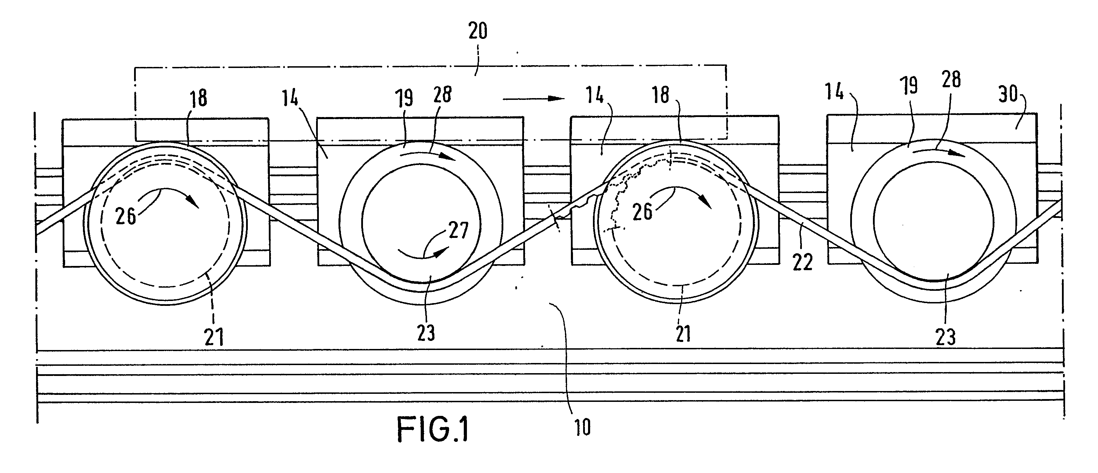

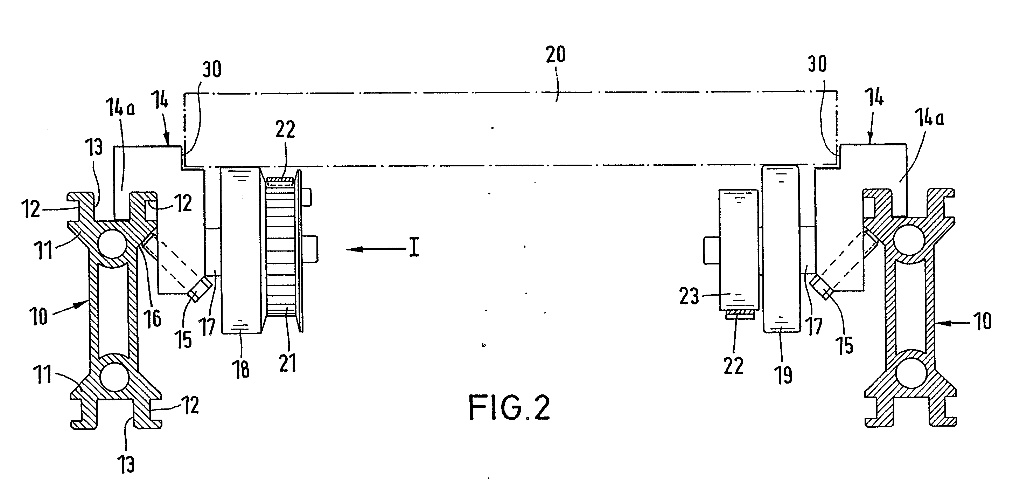

Der Duplex-Rollenförderer nach den Fign. 1 und 2 weist zwei längslaufende parallele Profilleisten 10 auf, die symmetrisch zu ihrer vertikalen Längsmittelebene und zu ihrer horizontalen Längsmittelebene ausgebildet sind. Am oberen und am unteren Ende jeder Profilleiste 10 befindet sich ein Kopf 11 mit zwei zu entgegengesetzten Seiten hin offenen Nuten 12 und einer in vertikaler Richtung offenen Nut 13. Die Profilleisten 10 sind an (nicht dargestellten) Tragvorrichtungen befestigt und beispielsweise auf einem Gestell oder Tisch angeordnet.

An jede Profilleiste 10 sind mehrere Lagerböcke 14 angesteckt. Der Lagerbock 14 weist einen hakenförmigen Ansatz 14a auf, der in die obere Nut 13 des Kopfes 11 eintaucht und die halbe Nutbreite ausfüllt. Die vertikale Wand des Lagerbocks 14 liegt an der Seitenwand des Kopfes 11 an, so daß der Lagerbock 14 von oben her auf die eine Hälfte des Kopfes 11 aufgesetzt bzw. in die Profilleiste 10 eingehängt werden kann und dann längs der Profilleiste 10 verschiebbar ist. Das Festklemmen des Lagerbocks 14 erfolgt durch ein Klemmelement 15 in Form einer Schraube, die mit einem Innengewinde des Lagerbocks 14 in Eingriff ist und schräg von unten her gegen eine Schrägfläche 16 des Kopfes 11 drückt, um den Haken 14a gegen den Grund und die Seitenwand der Nut 13 zu pressen.

Von dem Lagerbock 14 steht die Rollenachse 17 nach innen, d.h. in Richtung auf die andere Profilleiste 10, frei ab. Auf der Rollenachse 17 ist eine Tragrolle 18 oder eine Tragrolle 19 mit einem Wälzlager gelagert. Die Tragrollen 18 und 19 unterscheiden sich dadurch voneinander, daß die Tragrollen 18 den Werkstückträger 20 antreiben, während die Antriebsrollen 19 freilaufende, nicht-antreibende Rollen sind. Jede der antreibenden Antriebsrollen 18 ist mit einer Riemenrolle 21 fest verbunden, die an der Innenseite dieser Tragrolle 18 angeordnet ist. Die Riemenrolle 21 ist eine Zahnrolle, die mit einem Antriebsriemen 22 (Zahnriemen) in Eingriff ist.

Die nicht-antreibenden Umlenkrollen 23 stehen mit der zugehörigen Tragrolle 19 nicht in Verbindung, d.h. sie sind auf der Rollenachse 17 freidrehend gelagert, ohne daß eine Kopplung mit der zugehörigen Tragrolle 19 besteht.

Wie aus Fig. 1 hervorgeht, läuft der Antriebsriemen 22 abwechselnd um die Oberseite einer antreibenden Riemenrolle 21 und dann um die Unterseite einer nicht-antreibenden Umlenkrolle 23 herum. Da alle Riemenrollen an der Profilleiste 10 in derselben Höhe gelagert sind, ergibt sich ein wellenförmiger Verlauf des Antriebsriemens 22. Die mit der Verzahnung versehene Antriebsseite des Antriebsriemens 22 steht mit der Verzahnung der Riemenrollen 18 in Eingriff, während an den Umlenkrollen 23 die Rückseite des Zahnriemens anliegt. In Fig. 1 geben die Pfeile 26 die Drehrichtungen der Riemenrollen 21 und die Pfeile 27 die Drehrichtungen der Umlenkrollen 23 an. Die Pfeile 28 bezeichnen die Drehrichtungen der nicht-angetriebenen Tragrollen 19 beim Transport des Werkzeugträgers 20. Man erkennt, daß die Umlenkrollen 23 von dem Antriebsriemen 22 entgegen der Förderrichtung angetrieben werden und sich jeweils entgegen ihrer zugehörigen Tragrolle 19 drehen.

Der Werkstückträger 20 ist eine Palette mit flacher Bodenseite, die auf den Tragrollen 18 und 19 aufliegt. Der Werkzeugträger 20 erstreckt sich in Längsrichtung über mindestens zwei Tragrollen 18,19, so daß er in jedem Fall auf einer angetriebenen Tragrolle 18 aufliegt. Die Tragrollen 19 unterstützen lediglich den Werkzeugträger und drehen sich durch den Eingriff mit dem Werkzeugträger, sind im übrigen aber nicht angetrieben.

An den einander zugewandten Innenseiten der Lagerböcke 14 sind an den oberen Enden Ausnehmungen vorgesehen, in denen die seitlichen Führungsflächen 30 angeordnet sind. Die Lagerböcke erstrecken sich über die Tragrollen 18 hinaus nach oben und die seitlichen Führungsflächen 30 sind so angeordnet, daß der Werkstückträger 20 mit seinen seitlichen Rändern in die Ausnehmungen eindringt und von den seitlichen Führungsflächen 30 geführt wird.

Die Außendurchmesser der Tragrollen 18,19 sind größer als die Außendurchmesser der mit dem Antriebsriemen zusammenwirkenden Außenflächen der Riemenrollen 21 und Umlenkrollen 23, so daß der Antriebsriemen 22 nicht mit dem Werkstückträger in Berührung kommt.

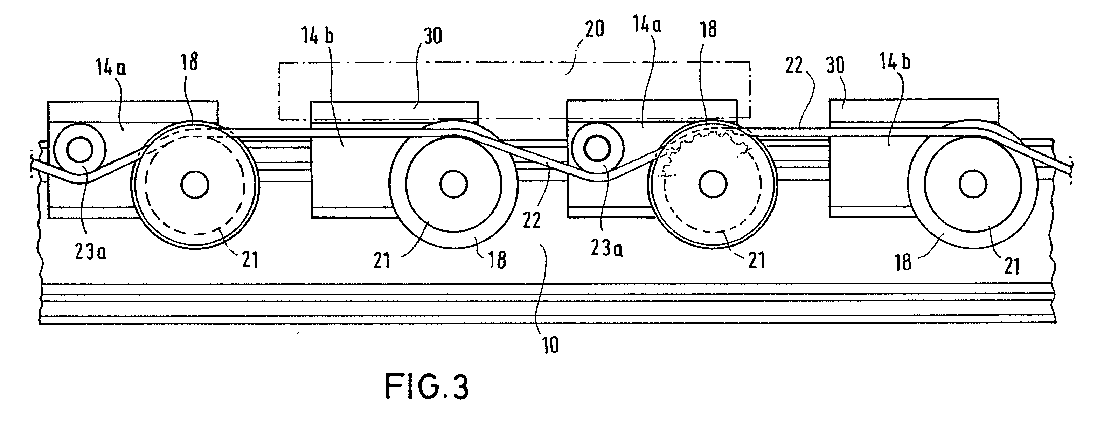

Bei dem Ausführungsbeispiel von Fig. 3 sind an jeder Führungsschiene erste Lagerböcke 14a und zweite Lagerböcke 14b abwechselnd mit gegenseitigen Abständen an geordnet. Jeder erste Lagerbock 14a weist ein Rollenpaar aus Tragrolle 18 und damit fest verbundener Riemenrolle 21 auf und ferner eine frei drehbare Riemenrolle 23a, die nur als Umlenkrolle wirkt. Die Riemenrolle 23a drückt von oben her gegen die Rückseite des Zahnriemens 22 und bewirkt, daß dieser Zahnriemen nach unten ausgebogen wird, bevor er auf die Riemenrolle 21 desselben Lagerbocks 14a läuft.

Zwischen jeweils zwei ersten Lagerböcken 14a ist ein zweiter Lagerbock 14b angeordnet, der ausschließlich ein Rollenpaar aus Tragrolle 18 und damit fest verbundener Riemenrolle 21 trägt, also keine Umlenkrolle hat. Zwischen einem ersten Lagerbock 14a und einem zweiten Lagerbock 14b verläuft der Antriebsriemen 22 horizontal und jeweils zwischen einem zweiten Lagerbock 14b und einem ersten Lagerbock 14a bewirkt die den Riemen umlenkende Riemenrolle 23a, daß der Antriebsriemen nach unten gedrückt wird und somit die benachbarten Riemenrollen 21 nicht nur tangiert, sondern auf einem kurzen Stück ihres Umfangs begleitet. Eine den Riemen umlenkende Riemenrolle 23a ist also nur in jedem zweiten Zwischenraum zwischen zwei Riemenrollen 21 vorgesehen, jedoch reicht dies aus, um für alle Riemenrollen 21 sicherzustellen, daß der Antriebsriemen 22 diese Riemenrollen nicht nur tangiert, sondern auf einem Teil ihres Umfangs umfaßt. Alternativ wäre es auch möglich, alle Lagerböcke als Lagerböcke 14a mit Umlenkrolle auszubilden, jedoch würde dazu eine größere Riemenlänge benötigt und der Riemen würde häufiger umgelenkt und verformt. Außerdem würde die Zahl der benötigten Umlenkrollen vergrößert. Da die Riemenrollen 21 alle auf gleicher Höhe angeordnet sind und gleichen Durchmesser haben, verläuft der Antriebsrie-men 22 jeweils zwischen zwei Riemenrollen 21, zwischen denen sich keine Umlenkrolle 23a befindet, horizontal und zwischen zwei Riemenrollen 21, zwischen denen sich eine Umlenkrolle 23a befindet, wird der Antriebsriemen Vförmig nach unten gedrückt. Bei der beschriebenen Anordnung von ersten Lagerböcken 14a und zweiten Lagerböcken 14b erfolgt nur in jedem zweiten Zwischenraum zwischen zwei benachbarten Riemenrollen 21 eine Auslenkung des Antriebsriemens nach unten, während der Antriebsriemen in den übrigen Zwischen-räumen horizontal verläuft.

**Ansprüche**

1. Duplex-Förderer mit zwei parallelen Profilleisten (10), die an den einander zugewandten Seiten Tragrollen (18) für Werkstückträger (20) aufweisen, die an längs der Profilleisten (10) verschiebbaren und feststellbaren Lagerböcken (14) gelagert sind, **dadurch gekennzeichnet,** daß an den einander zugewandten Innenseiten mindestens einiger Tragrollen (18) Riemenrollen (21) vorgesehen sind, über die ein Antriebsriemen (22) läuft, und daß die Werkstückträger (20) zwischen seitlichen Führungsflächen (30) der Lagerblöcke (14) mit geringem Spiel geführt sind.

2. Duplex-Förderer nach Anspruch 1, dadurch gekennzeichnet, daß einige Tragrollen (18) mit ihrer zugehörigen Riemenrolle (21) fest verbunden sind, daß dazwischen Tragrollen (19) mit zugehörigen Umlenkrollen (23) angeordnet sind und daß ein Antriebsriemen (22) mit seiner Außenseite um eine mit ihrer Tragrolle (18) fest verbundene Riemenrolle (21) und mit seiner Rückseite um eine von ihrer Tragrolle (19) entkoppelte Umlenkrolle (23) läuft.

3. Duplex-Förderer nach Anspruch 1, dadurch gekennzeichnet, daß mindestens einige erste Lagerböcke (14a) ein Rollenpaar aus Tragrolle (18) und damit fest verbundener Riemenrolle (21) aufweisen und eine Umlenkrolle (23a) tragen.

4. Duplex-Förderer nach Anspruch 3, dadurch gekennzeichnet, daß zwischen jeweils zwei ersten Lagerböcken (14a) ein zweiter Lagerbock (14b) ange ordnet ist, der nur ein Rollenpaar aus Tragrolle (18) und damit fest verbundener Riemenrolle (21) aufweist.

5. Duplex-Förderer nach Anspruch 3, dadurch gekennzeichnet, daß die Antriebsriemen (22) Zahnriemen und die fest mit ihren Tragrollen (18) verbundenen Riemenrollen (21) Zahnrollen sind, während die weiteren Riemenrollen (23a) eine glatte Umfangsfläche haben.

FIG.1

FIG.2

FIG.3

EP 0 341 468 A2